# EUROPEAN PATENT APPLICATION

(11) **EP 4 759 565 A1**
(43) Date of publication of application: **17.06.2026**
(21) Application number: 25221120.6
(22) Date of filing: 05.12.2025
(51) Int. Cl.: B60C 11/24, B60C 23/04, G01C 22/00, B60C 23/00

(54) **SYSTEM AND METHOD FOR ESTIMATION OF MILEAGE ON A TIRE**

(30) Priority: 16.12.2024 US 202463734270 P; 29.10.2025 US 202519372439
(71) Applicant: The Goodyear Tire & Rubber Company, Akron, OH 44316 (US)
(72) Inventor: Pozzan, Matteo, L-7750 Colmar-Berg (LU); Torregrossa, Dario, L-2155 Luxembourg (LU); Ledda, Mirko, L-7750 Colmar-Berg (LU); Chi, Wonyoung, L-7750 Colmar-Berg (LU)
(74) Representative: Kutsch, Bernd

(57) **Abstract**

A system and method or estimating mileage of a tire (12) supporting a vehicle (14) is disclosed. The system (10) comprises a processor (38); means for measurements of a tread depth (52) of the tire (12); and means for transmitting the measurements of tread depth (52) to the processor (38). The processor (38) is configured to receive the measurements of tread depth (52), to determine an estimate of mileage of the tire (12) with an inverse treadwear model (54) from the measurements of tread depth (52), to generate a notification (76) when the estimate of mileage of the tire (12) is determined, and to transmit the notification (76) to at least one of a vehicle control system and a device (50) for actuation of the vehicle (14) in response to the notification.

## Description

### Field of the Invention

The invention relates generally to tire monitoring systems. More particularly, the invention relates to systems and methods that predict conditions or characteristics of a tire. Specifically, the invention is directed to a system and to a method for estimating the mileage on a tire from a measured tread depth of the tire.

### Background of the Invention

The mileage of or on a tire, which is the number of miles traveled by the tire, plays an important role in the health of the tire, which in turn may affect vehicle factors such as safety, reliability, and performance. Determination of the mileage on the tire may be beneficial to a user of a vehicle or a manager of a fleet of vehicles in certain situations.

For example, it may be beneficial to advise a vehicle user or a fleet manager of the mileage on a tire to enable replacement of the tire before a threshold of wear on the tire is reached. Such advance notice enables the user to proactively schedule tire replacement as desired, and before tire wear becomes an issue. Advance notice also enables a manager of a fleet of vehicles to schedule tire replacement as preventive maintenance before the tire reaches the wear threshold. Monitoring of tire mileage also enables service centers to optimize stock management and enables tire manufacturers to optimize manufacturing operations.

It is often difficult to determine the mileage experienced by a tire, particularly when vehicle fleets are involved. While vehicle mileage is tracked by an odometer or other measurement device, such tracking devices are not common for tires. Because tires may be replaced on the vehicle without an accurate record of replacement, the actual mileage on any given tire on the vehicle may be unknown. In addition, prediction of the mileage of a tire may be difficult due to the variable nature of driving conditions and driving behavior.

As a result, there is a need in the art for a system and a method that accurately and reliably estimates the mileage on a tire.

### Summary of the Invention

The invention relates to a system in accordance with claim 1 and to a method in accordance with claims 14.

Dependent claims refer to preferred embodiments of the invention.

According to an aspect of an exemplary embodiment of the invention, a system is provided for estimating mileage on a tire, in which the tire supports a vehicle. The system includes measurements of a tread depth of the tire and means for transmitting the measurements of tread depth to a processor. The processor is configured to receive the measurements of tread depth and determine an estimate of mileage on the tire with an inverse treadwear model from the measurements of tread depth. The processor is also configured to generate a notification when the estimate of mileage on the tire is determined and transmit the notification to a vehicle control system or a device for actuation of the vehicle in response to the notification.

According to an aspect of another exemplary embodiment of the invention, a method is provided for estimating mileage on a tire, in which the tire supports a vehicle. The method incudes obtaining measurements of a tread depth of the tire and transmitting the measurements of tread depth to a processor. The measurements of tread depth are received in the processor and an inverse treadwear model is executed on the processor. An estimate of mileage on the tire is determined with an inverse treadwear model from the measurements of tread depth. When the estimate of mileage on the tire is determined a notification is generated, and the notification is transmitted to a vehicle control system or a device for actuation of the vehicle in response to the notification.

### Brief Description of the Drawings

The invention will be described by way of example and with reference to the accompanying drawings, in which:
Figure 1 is schematic image of a vehicle and schematic perspective view of a tire that employ an exemplary embodiment of a system of the present invention for estimating mileage on a tire, showing the tire partially in section;
Figure 2 is a schematic plan view of the vehicle shown in Figure 1;
Figure 3 is a schematic representation of data transmission to a cloud-based server and to a device;
Figure 4 is a schematic diagram of aspects of an exemplary embodiment of a system for estimating tire mileage of the present invention;
Figure 5 is a representation of an exemplary tread depth measurement technique employed in the exemplary embodiment of the system of the present invention for estimating mileage on a tire;
Figure 6, is a schematic cross-sectional view of a portion of a tire and another exemplary tread depth measurement technique employed in the exemplary embodiment of the system of the present invention for estimating mileage on a tire; and
Figure 7 is a graphical representation of an aspect of the exemplary embodiment of the system of the present invention for estimating mileage on a tire.

Similar numerals refer to similar parts throughout the drawings.

### Definitions

"Axial" and "axially" means lines or directions that are parallel to the axis of rotation of the tire.

"CAN bus" or "CAN bus system" is an abbreviation for controller area network system, which is a vehicle bus standard designed to allow microcontrollers and devices to communicate with each other within a vehicle without a host computer.

"Circumferential" means lines or directions extending along the perimeter of the surface of the annular tread perpendicular to the axial direction.

"Footprint" means the contact patch or area of contact created by the tire tread with a flat surface as the tire rotates or rolls.

"Inboard side" means the side of the tire nearest the vehicle when the tire is mounted on a wheel and the wheel is mounted on the vehicle.

"Lateral" means an axial direction.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"Tread element" or "traction element" means a rib or a block element defined by a shape having adjacent grooves.

### Detailed Description of Preferred Embodiments of the Invention

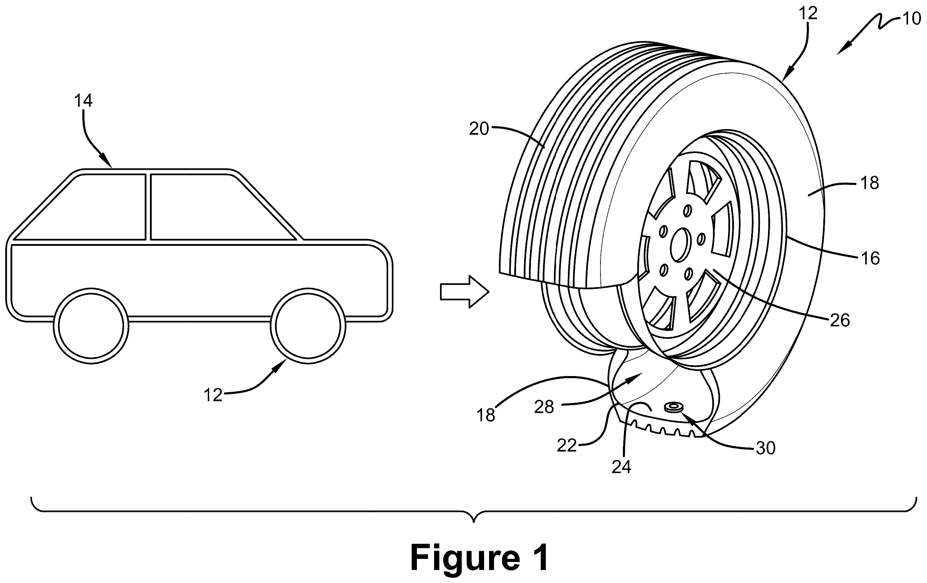

With reference to Figures 1 through 7, an exemplary embodiment of the system 10 of the present invention for estimating mileage on a tire is presented. With particular reference to Figure 1, the system 10 estimates mileage on each tire 12 supporting a vehicle 14. It is to be understood that mileage is the number of miles or other unit of distance traveled by the tire 12. While the vehicle 14 is depicted as a passenger car, the invention is not to be so restricted. The principles of the invention find application in other vehicle categories such as commercial trucks and off-the-road vehicles, in which vehicles may be supported by more or fewer tires 12. In addition, the invention finds application in a single vehicle 14 or in fleets of vehicles.

Each tire 12 includes a pair of bead areas 16 (only one shown) and a bead core (not shown) embedded in each bead area. Each one of a pair of sidewalls 18 extends radially outward from a respective bead area 16 to a ground-contacting tread 20, which experiences wear over the life of the tire 12. The tire 12 is reinforced by a carcass 22 that toroidally extends from one bead area 16 to the other bead area, as known to those skilled in the art. An innerliner 24 is formed on the inside surface of the carcass 22. The tire 12 is mounted on a wheel 26 in a manner known to those skilled in the art and, when mounted, forms an internal cavity 28 that is filled with a pressurized fluid, such as air.

A sensor unit 30 may be attached to the innerliner 24 of each tire 12 by means such as an adhesive for the purpose of detecting certain real-time tire parameters inside the tire, such as tire pressure and temperature. It is to be understood that the sensor unit 30 may be attached in such a manner, or to other components of the tire 12, such as between layers of the carcass 22, on or in one of the sidewalls 18, on or in the tread 20, a combination thereof, and/or to a valve stem (not shown) of the tire. For the purpose of convenience, reference herein shall be made to mounting of the sensor unit 30 on the tire 12, with the understanding that mounting includes all such attachment.

The sensor unit 30 may be a tire pressure monitoring system sensor, of a type that is commercially available, and may be of any known configuration. Each sensor unit 30 preferably also includes electronic memory capacity for storing identification (ID) information for each tire 12, known as tire ID information. Alternatively, tire ID information may be included in another sensor unit, or in a separate tire **ID** storage medium, such as a tire ID tag. The tire ID information may include manufacturing information for the tire 12, a service history of the tire, specific features and parameters of the tire, and/or mechanical characteristics of the tire.

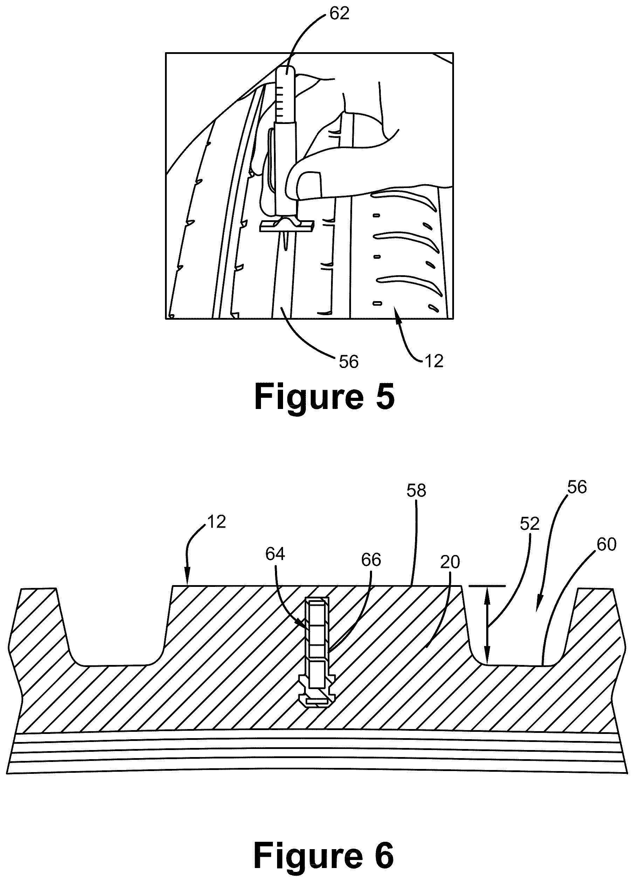

The sensor unit 30 may also measure parameters of the tire 12 that are associated with wear. For example, the sensor unit 30 may directly measure a depth of the tread 20 through techniques that are known to those skilled in the art, as described below in association with a wear sensor 64 (Figure 6). Alternatively, the sensor unit 30 may measure parameters such a contact length or footprint length of the tread 20, which may in turn be used to determine a depth of the tread through techniques that are known to those skilled in the art, as also described in greater detail below.

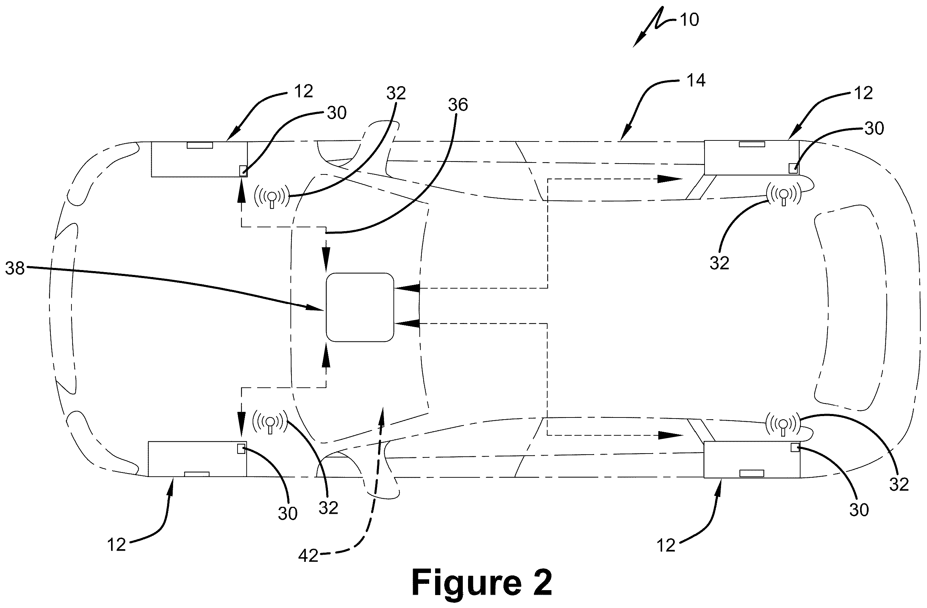

Turning now to Figure 2, each sensor unit 30 preferably includes a respective antenna 32 for wireless transmission 36 of data corresponding to parameters measured by the sensor unit, as well as tire **ID** data, to a processor 38. The processor 38 may be mounted on the vehicle 14 as shown or may be integrated into the sensor unit 30. For the purpose of convenience, the processor 38 will be described as being mounted on the vehicle 14, with the understanding that the processor may alternatively be integrated into the sensor unit 30. Preferably, the processor 38 is in electronic communication with or integrated into an electronic system of the vehicle 14, such as the vehicle CAN bus system 42, which is referred to as the CAN bus.

Aspects of the system 10 preferably are executed on the processor 38 or another processor that is accessible through the vehicle CAN bus 42, which enables input of data from the sensor unit 30, as well as input of data from other sensors that are in electronic communication with the CAN bus. In this manner, the system 10 enables measurement of tire parameters as described above with the sensor unit 30, and transmission of the measurement data to the processor 38. Tire **ID** information preferably is also transmitted from the sensor unit 30 to the processor 38.

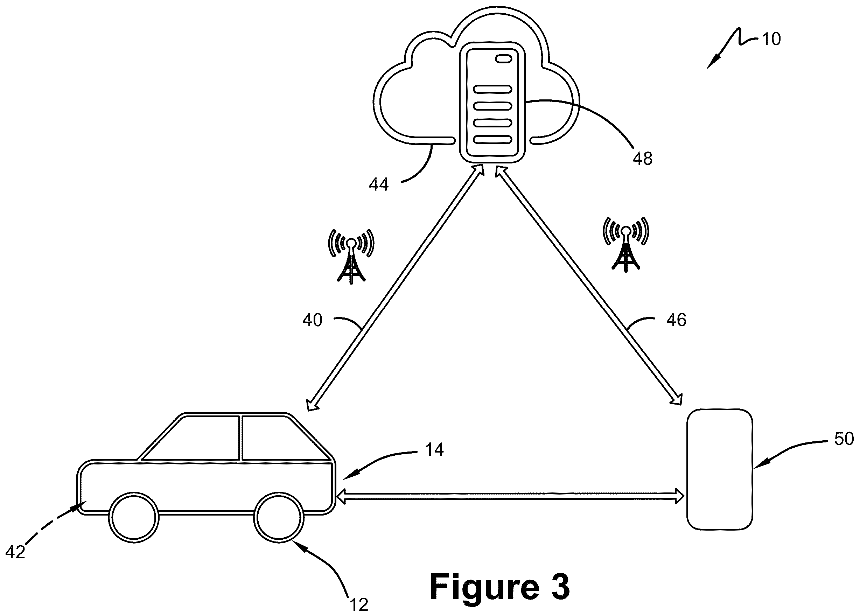

Referring to Figure 3, data including the measured tire parameters and ID information may be wirelessly transmitted 40 from the processor 38 (Figure 2) and/or the CAN-bus 42 on the vehicle 14 to a remote processor 48, such as a processor in a cloud-based server 44. The cloud-based server 44 may execute aspects of the system 10. Output from the system 10 may be wirelessly transmitted 46 to a device 50 that is accessible to an operator of the vehicle 14, such as a display device, or to a fleet manager, such as a fleet management server and/or display device.

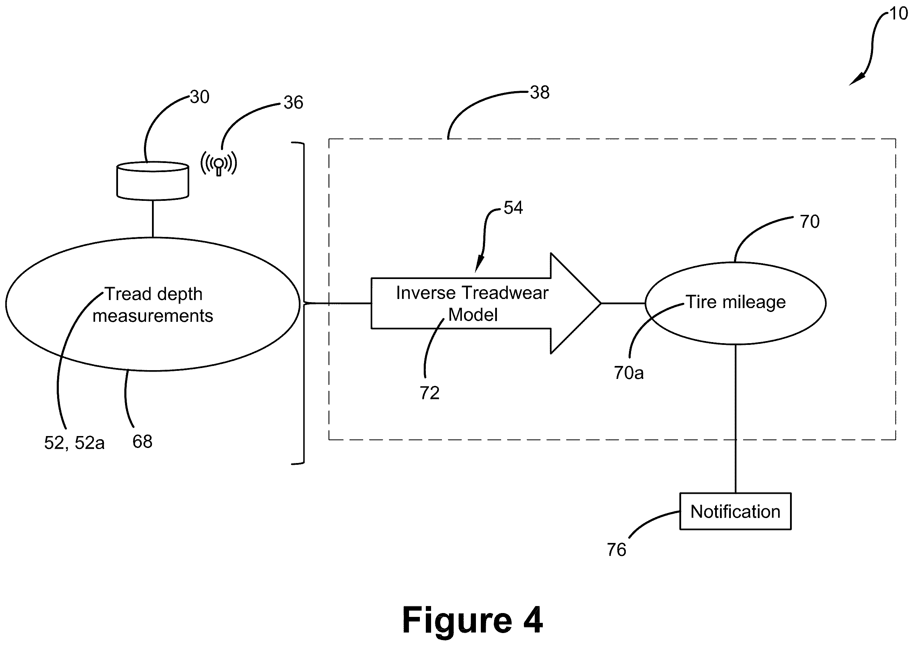

Turning to Figure 4, the system 10 for estimating mileage on a tire 12 is in electronic communication with and is executed on the processor 38. As described above, data corresponding to parameters of the tire 12 measured by the sensor unit 30, as well as tire **ID** data, are transmitted 36 to the processor 38. One or more measurements of tread depth 52 are also transmitted to the processor 38 and are communicated or transmitted to an inverse treadwear model 54, which is in electronic communication with and is executed on the processor.

With additional reference to Figure 6, the tire 12 includes the ground-contacting tread 20. As the tire 12 travels, it experiences tread wear or tire wear, which refers to the loss of material from the tread 20. It is to be understood that for the purpose of convenience, the terms "tread wear" and "tire wear" may be used interchangeably. A current wear state of the tire 12 is indicated by the tread depth 52. More particularly, the tread 20 is formed with one or more non-skid grooves 56. Each groove 56 extends radially from an external, ground-contacting surface 58 to a groove floor 60. The distance from the ground-contacting surface 58 to the groove floor 60 corresponds to the tread depth 52. As the tire 12 travels, the tread depth 52 typically decreases.

The measurements of tread depth 52 may be obtained from techniques that are known to those skilled in the art. For example, with additional reference to Figure 5, a depth gauge 62 may be employed to manually measure the tread depth 52. Such manual measurements of the tread depth 52 preferably are saved or recorded in a suitable electronic medium 68 and communicated or transmitted to the processor 38 through an antenna or other electronic connection known to those skilled in the art.

Returning to Figure 6, another approach to measure tread depth 52 may include the use of a wear sensor 64 disposed in a cavity 66 formed in the tread 20. The wear sensor 64 directly measures wear of the tire 12 and indicates tread depth 52 as known to those skilled in the art. Such measurements of the tread depth 52 may employ the sensor unit 30 or the wear sensor 64, or may be saved or recorded in the suitable electronic medium 68, and communicated or transmitted to the processor 38 through an antenna or other electronic connection known to those skilled in the art. Exemplary sensor-based techniques to measure tread depth 52 are described in U.S. Patent Numbers: 12,064,999; 11,964,515; 11,639,077; 11,090,984; 9,649,889; and 8,996,239; and in U.S. Patent Application Publication Numbers: 2024/0343073; 2023/0182510; 2019/0193480; 2019/0193479; and 2016/0075189.

Other direct sensor-based techniques to measure tread depth 52 employ drive-over-readers, which scan the tread depth 52 as the tire 12 passes over the reader. Such measurements of the tread depth 52 preferably are saved or recorded in the suitable electronic medium 68 and communicated or transmitted to the processor 38 through an antenna or other electronic connection known to those skilled in the art. Exemplary drive-over-readers and associated techniques for measurement of tread depth 52 are described in U.S. Patent Numbers: 11,421,982; 11,413,912; 9,183,423; 9,000,923; 8,621,919; 8,312,766; 7,969,293; 7,942,048; 7,578,180; 6,591,671; 6,518,877; and 6,400,261, and in U.S. Patent Application Publication Number 2022/0185037.

Other approaches to measure tread depth 52 have involved indirect estimations of the wear state of the tire 12 based on estimation or prediction techniques. Such measurements of the tread depth 52 may employ the sensor unit 30 and/or may be saved or recorded in the suitable electronic medium 68 and communicated or transmitted to the processor 38 through an antenna or other electronic connection known to those skilled in the art. Exemplary indirect estimation techniques are described in U.S. Patent Numbers: 11,981,163; 11,548,324; 10,603,962; 9,878,721; 9,873,293; 9,821,611; 9,663,115; 9,610,810; 9,442,045; 9,428,013; 9,259,976; and 9,050,864, and in U.S. Patent Application Publication Numbers: 2023/0173852; 2022/0063347; and 2020/0182746.

Returning to Figure 4, as described above, the measurements of the tread depth 52 may employ the sensor unit 30 and/or may be saved or recorded in the suitable electronic medium 68 and communicated or transmitted to the processor 38 through an antenna or other electronic connection known to those skilled in the art, and are in turn communicated or transmitted to the inverse treadwear model 54. The inverse treadwear model 54 receives the measurements of tread depth 52 and determines a current mileage 70a of the tire 12.

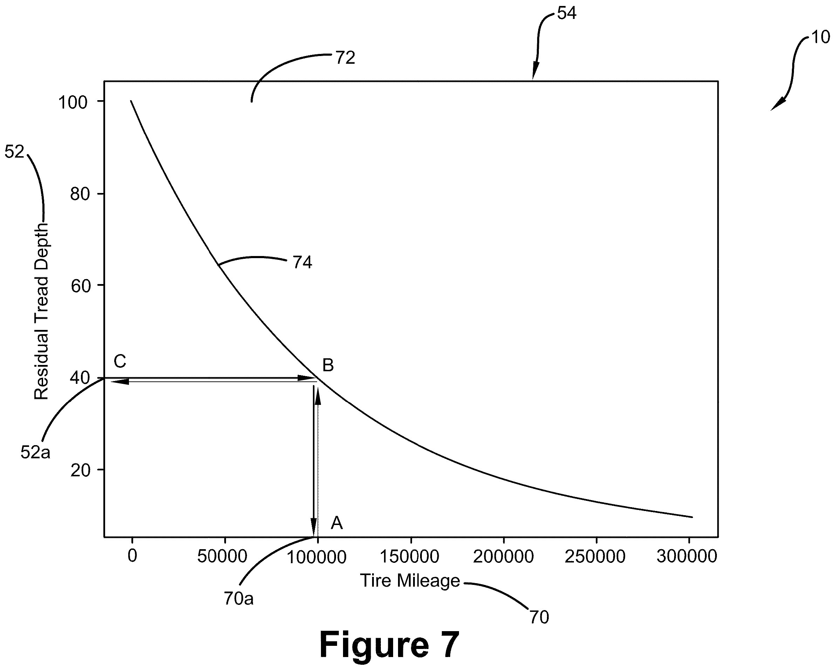

With additional reference to Figure 7, the inverse treadwear model 54 preferably employs a Bayesian model 72 to determine the current mileage 70a on the tire 12. The Bayesian model 72 preferably is a statistical model that employs a Bayesian inference to update probabilities based on new tread depth measurement 52 data and incorporates prior knowledge about the variables of tread depth and mileage 70 of the tire 12. The Bayesian model 72 may employ a Bayesian network to visually represent the relationships between the variables of the variables of tread depth 52 and mileage 70 and calculate probabilities within a Bayesian framework.

In Figure 7, the Bayesian model 72 thus may include a graphical representation of residual or remaining tread depth, which is reflected in measurements of tread depth 52, plotted against mileage 70 to generate a trained curve 74. By way of example, the Bayesian model 72 has been trained by performing a path from the mileage data 70 to the tread depth data 52, indicated by the arrows extending from point A to point B to point C. The inverse treadwear model 54 includes inverting the Bayesian model 72 by performing an inverse path from the tread depth data 52 to the mileage data 70, indicated by the arrows extending from point C to point B to point A. In this manner, the inverse treadwear model 54 is trained and determines an accurate estimate of the current mileage 70a on the tire 12 for a given measurement of tread depth 52a.

It is to be understood that the inverse treadwear model 54 may include other types of statistical prediction or estimation models other than the Bayesian model 72 without affecting the overall concept or operation of the system 10 of the present invention.

Returning to Figure 4, when the inverse treadwear model 54 determines the current estimate of the mileage 70a on the tire 12 for a given measurement of tread depth 52a, the system 10 preferably generates a notification 76. The notification 76 may include the estimate of the current mileage 70a on the tire 12, an alert if the current mileage exceeds a predetermined threshold, and/or an estimate of remaining mileage for the tire. By way of example, an estimate of remaining mileage for the tire 12 may be obtained by subtracting the current mileage estimate 70a from a total recommended mileage for the tire.

Returning to Figure 3, when the notification 76 is generated by the system 10, the notification may be transmitted from the processor 38 through the vehicle CAN bus system 42 to an electronic control system of the vehicle 14. The notification 76 may then be employed to actuate and thus improve the function of a vehicle control system, such as an anti-lock brake system (ABS), electronic stability control system (ECS), and the like.

The notification 76 may also be wirelessly transmitted to the device 50 that is accessible to an operator of the vehicle 14, such as a display device, or to a fleet manager, such as a fleet management server and/or display device. The operator may actuate the vehicle 14 to take appropriate action in response to the notification 76. The fleet manager may schedule an action or instruct the vehicle operator to actuate the vehicle 14 to take appropriate action in response to the notification 76.

In this manner, the system 10 of the present invention for estimating mileage on a tire 12 employs measurements of tread depth 52 and an inverse treadwear model 54 to estimate the current mileage 70a on the tire at a given tread depth 52a. The system 10 thus accurately and reliably estimates the actual current mileage 70a on a tire 12 regardless of vehicle driving conditions and driving behavior and without additional information, such as records of tire replacement.

The present invention also includes a method for estimating mileage on a tire 12. The method includes steps in accordance with the description that is presented above and shown in Figures 1 through 7.

It is to be understood that the structure of the above-described system 10 for estimating mileage on a tire 12 may be altered or rearranged, or components or steps known to those skilled in the art omitted or added, without affecting the overall concept or operation of the invention.

## Claims

1. A system for estimating mileage of a tire (12) supporting a vehicle (14), the system (10) comprising:
a processor (38);
means for measurements of a tread depth (52) of the tire (12); and
means for transmitting the measurements of tread depth (52) to the processor (38);
wherein the processor (38) is configured to receive the measurements of tread depth (52), to determine an estimate of mileage of the tire (12) with an inverse treadwear model (54) from the measurements of tread depth (52), to generate a notification (76) when the estimate of mileage of the tire (12) is determined, and to transmit the notification (76) to at least one of a vehicle control system and a device (50) for actuation of the vehicle (14) in response to the notification.

2. The system of claim 1, wherein the inverse treadwear model (54) employs a Bayesian model (72), preferably a Bayesian model (72) that is trained by performing a path from mileage data to tread depth data.

3. The system of claim 2, wherein the inverse treadwear model (54) is configured to invert the Bayesian model (72) by performing an inverse path from the tread depth data to the mileage data.

4. The system of at least one of the previous claims, further comprising the processor (38) being configured to receive identification information for the tire (12).

5. The system of at least one of the previous claims, wherein the measurements of tread depth (52) are obtained from manual measurement and/or wherein the measurements of tread depth (52) are obtained from wear sensor (64) disposed in a tread (20) of the tire (12).

6. The system of at least one of the previous claims, wherein the measurements of tread depth (52) are obtained from a drive-over-reader; and/or wherein the measurements of tread depth (52) are obtained from indirect estimations of a wear state of the tire (12).

7. The system of at least one of the previous claims, wherein the processor (38) is mounted on the vehicle (14).

8. The system of at least one of the previous claims 1 to 6, wherein the processor (38) is remote from the vehicle (14).

9. The system of at least one of the previous claims, wherein the means for transmitting the measurements of tread depth to the processor (38) include an antenna.

10. The system of at least one of the previous claims, wherein the notification (76) includes the estimate of the mileage on the tire (12); and/or wherein the notification (76) includes an estimate of remaining mileage for the tire.

11. The system of at least one of the previous claims, wherein the notification (76) includes an alert if the estimate of mileage exceeds a predetermined threshold.

12. The system of at least one of the previous claims, wherein the device (50) is a display device accessible to an operator of the vehicle (14) and, optionally, wherein the operator is enabled to actuate the vehicle (14) in response to the notification (76).

13. The system of at least one of the previous claims, wherein the device (50) is at least one of a fleet management server and a display device, and wherein the device (50) is accessible to a fleet manager for allowing the fleet manager to schedule an action or instruct the vehicle operator to actuate the vehicle (14) in response to the notification (76).

14. A method for estimating mileage of a tire (12) supporting a vehicle (14), the method comprising the steps of:
obtaining measurements of a tread depth (52) of the tire (12);
transmitting the measurements of tread depth (52) to a processor (38);
receiving the measurements of tread depth (52) in the processor (38);
executing an inverse treadwear model (54) on the processor (38);
determining an estimate of mileage on the tire (12) with the inverse treadwear model (54) from the measurements of tread depth (52);
generating a notification (76) when the estimate of mileage on the tire (12) is determined; and
transmitting the notification (76) to at least one of a vehicle control system and a device (50) for actuation of the vehicle (14) in response to the notification (76).

15. The method of claim 14, wherein the method is carried out using a system (10) in accordance with at least one of the claims 1 to 13.
